# EUROPEAN PATENT SPECIFICATION

(11) **EP 1 886 364 B1**
(45) Date of publication and mention of the grant of the patent: **17.08.2011**
(21) Application number: 06768597.4
(22) Date of filing: 24.05.2006
(51) Int. Cl.: H01M 2/10

(54) **BATTERY AND METHOD FOR PRODUCING THE SAME**
BATTERIE UND VERFAHREN ZU IHRER HERSTELLUNG
PILE ET PROCEDE DE FABRICATION CORRESPONDANT

(30) Priority: 27.05.2005 KR 20050044929; 27.05.2005 KR 20050044930
(43) Date of publication of application: 13.02.2008
(73) Proprietor: E.M.W. Energy Co., Ltd., Geumcheon-gu, Seoul 153-803 (KR)
(72) Inventor: Ryou, Byung Hoon Raemian Bangbae Art Hill 109-1403, Seoul 137-060 (KR); Sung, Won Mo, 1303-401 Daelim Apt., Gyeonggi-do 429-450 (KR); MOON, Chang Soo, 502, Sungdo Primevill, Gyeonggi-do 422-090 (KR)
(74) Representative: Rupprecht, Kay
(86) International application number: PCT/KR2006/001946
(87) International publication number: WO 2006/126831

(56) References cited:
- JP-A- 60 001 770
- JP-A- 2000 173 678
- JP-A- 2002 373 711
- JP-A- 2003 036 895
- US-A1- 2003 232 242

## Description

### Technical Field

The present invention relates to a method of manufacturing a battery. More specifically, the invention relates to a method of manufacturing a standardized cylindrical zinc-air battery. Furthermore, the invention relates to a method of manufacturing a button cell battery having a variety of shapes in addition to the circular shape.

### Background Art

Scaling down of electrical devices has long been attempted and thus many portable electronics have been developed. In recent years, however, as a new paradigm, called ubiquitous Internet, has been introduced, a small size and easy-carrying electronic devices have been being developed in a further extensive and intensive way. Most electronic devices such as MP3 players, digital cameras, mobile telephones, PDAs, laptop computers or the like are being developed into a compact and easily portable form. In addition to this miniaturization, an attempt has also been made to provide a variety of functions to a single device such as an MP3 phone, and a camera phone. While these attempts provide to users a freedom of movement and convenience of use, a stable supply of power should be associated therewith and currently draws attentions as a technical challenge to be solved.

Conventionally, a battery has extensively been used as a power supplying means to electrical devices. Conventional batteries include a primary battery such as a manganese batter, an alkaline manganese battery and a zinc-air battery, and a secondary battery such as a Ni-Cd battery, a Ni-H battery, a lithium ion battery. Among them, the zinc-air battery has advantages of providing a relatively high voltage of 1.4V, and having a higher density of energy and a larger discharging capacity. Furthermore, since it exhibits a nearly constant discharging characteristic until being exhausted, the zinc-air battery is considered an alternative for the mercury battery, of which use is restricted because it contains heavy metals.

The above zinc-air battery includes, in general, a cathode, an anode, a separator for isolating them, and an electrolyte. These elements are sealed by a cathode can and an anode can, both of which are made of a conductive material. The cathode can and anode can are contacted with the cathode and anode respectively to serves as a cathode terminal and an anode terminal respectively. In particular, in order to prevent leakage of the electrolyte from inside of a battery, the cathode can and anode can need to be sealed. Conventionally, a gasket is inserted between the cathode can and anode can, which are then crimped for hermetically sealing.

These conventional button cell batteries are disclosed in U.S Patent No. 5,423,027, No. 5,486,431 issued to Tuttle, et al., Korean Patent No. 3060321, and the like. The conventional technology will be explained in detail, with reference to the accompanying drawings.

FIG. 1 is a sectional view of the conventional button cell battery disclosed in the U.S. Patent No. 5,432,027.

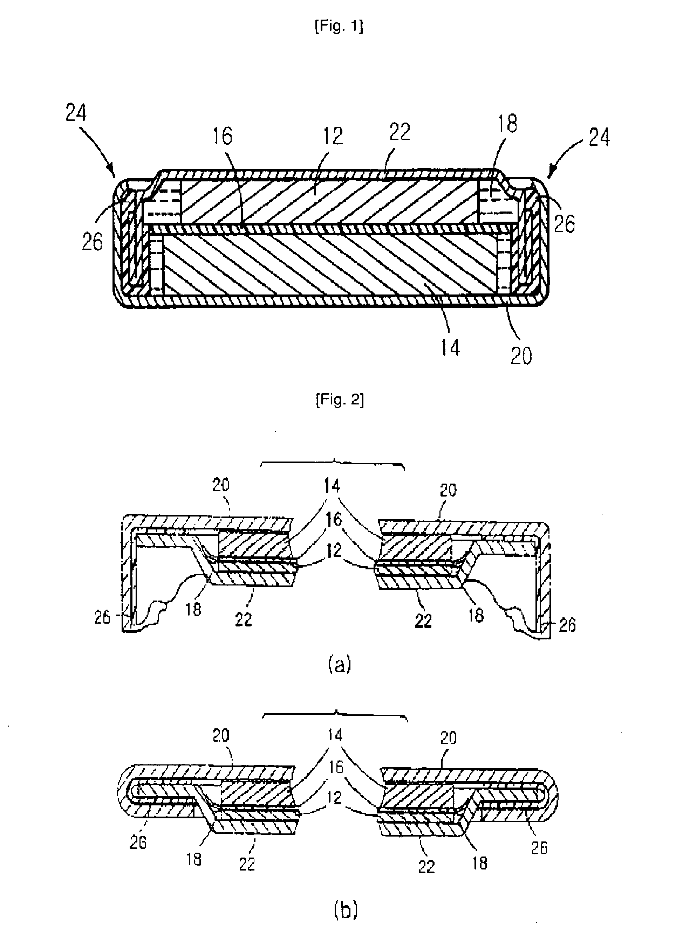

The button cell battery of FIG. 1 includes a cathode 14, an anode 12, a separator 16 interposed between them, and an electrolyte 18, which are sealed by a cathode can 20 and an anode can 22. In the seal 24, a gasket 26 is interposed between the cathode can 20 and the anode can 22 to seal them. The cathode can 20 is bent toward the anode can to cover the anode can 22, thereby performing a seal.

FIG. 2 shows a method of manufacturing a button cell battery, which is disclosed in the Korean Patent No. 3060321.

As shown in FIG. 2(a), an anode 12 on an anode can 22, a separator 16, an electrolyte 18, a cathode 14 and a gasket 26 are disposed in sequence, which are covered by a cathode can 20. Then, as shown in FIG. 2(b), the outer peripheral region of the cathode can 20 is crimped towards the anode can 22 to seal the inside of the battery.

As described above, in the conventional battery manufacturing process, a can is crimped to seal the battery, so that the process can be simplified. When the cathode can 20 is crimped, however, a pressure is exerted on the central portion of the cathode can 20, which is to be contacted with the cathode 14, thereby causing a deformation. In the case where the crimping pressure is increased in order to improve the precision of sealing, the above problem becomes worse. In addition, the gasket 26 interposed between the cathode can 20 and the anode can 22 leads to a further complicated manufacturing process.

In addition, in case of manufacturing a circular button cell battery, the conventional crimping method is suitable, while in case where a polygonal-shaped battery such as a rectangular or pentagonal one is preferred, the crimping is overlapped at the corners of a polygon and thus the crimping method is not applicable to the manufacturing of polygonal batteries.

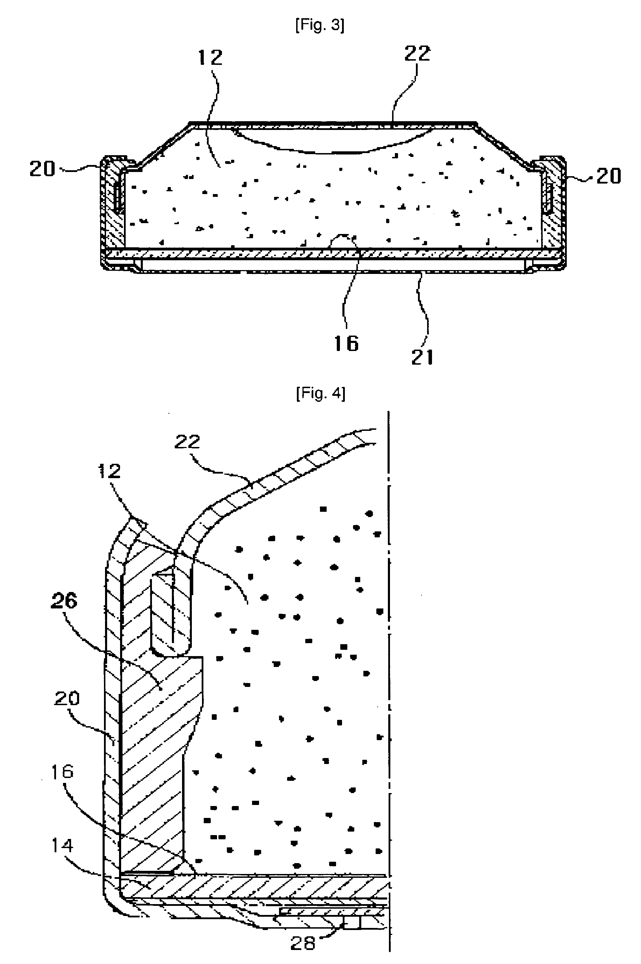

FIG. 3 is a sectional view of a conventional button type zinc-air battery.

Referring to FIG. 3, the conventional button type zinc-air battery includes a membrane as a cathode 14 and a zinc gel as an anode 12, and a separator 15 interposed between the membrane and the zinc gel. In addition, the membrane and the zinc gel are accommodated inside the cathode can 20 and the anode can 22 respectively to resultantly form a battery.

The membrane is a permeable membrane containing water molecules and generates hydroxyl ions (OH⁻) by contacting oxygen in air. This reaction may be expressed by the following chemical equation.

O₂ + 2H₂O + 4e⁻ ↔ 4OH⁻ ChemistryFigure 1

In the above reaction, electrons are supplied through the cathode can 20. The membrane is commonly made of carbon, but may be formed of other suitable materials, depending on the required voltage or its applications.

In this way, since the cathode reaction needs oxygen, the cathode must be provided with a path capable of contacting air. Thus, the cathode can 20 is provided with an air hole 21 formed at its bottom. When a batter is not used, the air hole 21 is sealed to suppress the cathode reaction.

The hydroxyl ions generated through the above chemical reaction are transferred to the zinc gel, which is an anode, through the separator 16. The separator 16 is permeable for hydroxyl ions, and on the other hand functions to prevent leakage of the zinc gel and to provide insulation between the zinc gel and the membrane.

The zinc gel contains mainly zinc powder and is mixed with additives and an electrolyte. Commonly, the electrolyte employs an aqueous solution of potassium hydroxide (KOH). If hydroxyl ions are transferred inside of the zinc gel, the zinc powder reacts with the hydroxyl ions to be oxidized. This reaction can be expressed by the following chemical equation.

Zn + 2OH⁻ ↔ Zn(OH)₂ + 2e⁻Zn + 2OH⁻ ↔ ZnO + H₂O + 2e⁻ ChemistryFigure 2

Due to this reaction, electrons are generated from the anode and the electrons are transferred through the anode can 22. Through this chemical reaction, theoretically a voltage of 1.65V can be derived at maximum.

The conventional zinc-air batteries are mostly implemented as a button cell type. In the button cell type zinc-air battery, similarly, hermetical sealing of the battery is performed through crimping of can. A conventional method of manufacturing a zinc-air battery is disclosed in Japanese Patent Laid-open Publication No. 2002-373711.

Referring to FIG. 4, the conventional manufacturing method of a zinc-air battery will be explained. The zinc-air battery includes a zinc gel 12 as an anode, a cathode membrane 14 as a cathode, and a separator 16 for insulating them. The zinc gel 12 and the cathode membrane 14 are surrounded and held by an anode can 22 and a cathode can 20 connected thereto. On the other hand, formed in the cathode can 20 is a through-hole 28 for contacting the cathode membrane 14 with air.

At the can distal area, a gasket 26 is interposed between the anode can 22 and the cathode can 20, and the cathode can 20 and the gasket 26 are crimped towards the anode can 22 to thereby seal the battery.

Such zinc-air batteries have favorable properties in terms of energy density, and discharging capacity and characteristic. But use of the conventional zinc-air battery has been limited to special areas such as hearing aids, cameras or the like. In particular, such zinc-air batteries have been commercialized as a button type battery only, but have not been manufactured in cylindrical standard types such as AAA, AA and the like. In order to commercialize a cylindrical zinc-air battery, they must be manufactured so as to generate a voltage and current suitable to the applications of the cylindrical batteries. Also, a manufacturing process must be developed so as to allow the zinc-air batteries to be made in a cylindrical form.

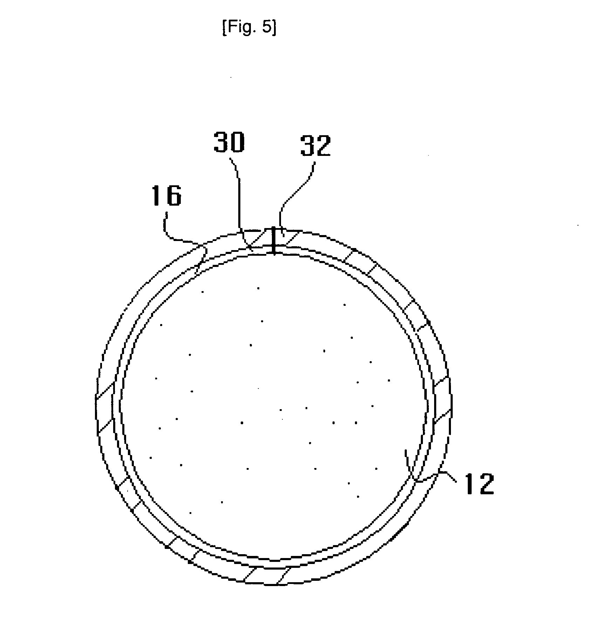

Referring to FIG. 5, problems in manufacturing conventional cylindrical zinc-air battery will be explained as follows.

FIG. 5 is a sectional view of an imaginary cylindrical zinc-air battery. In FIG. 5, identical elements to FIG. 3 are denoted by same reference numerals. Since a zinc-air battery contains a zinc gel as an anode, leakage of the zinc-gel must be avoided. In the conventional button type battery shown in FIG. 3, disposed underneath the zinc gel are a cathode membrane 14 and a separator 16 to prevent the zinc-gel from being leaked, thus leading to an easy fabrication. Since as shown in FIG. 5, however, a cylindrical battery is configured such that a separator 16 and a cathode membrane 14 capture the zinc gel, in order to form a cylindrical form, the cathode membrane 14 and the separator 16 need to have bonding areas 30 and 32, thus causing difficulties in blocking leakage of the zinc gel.

Therefore, in order to fabricate a cylindrical zinc-air battery, there needs to provide a method of bonding the separator 12 and the cathode membrane 14 while preventing the zinc gel from being leaked.

### Disclosure of Invention

### Technical Problem

Accordingly, the present invention has been made in order to solve the above problems, and it is an object of the invention to provide a method of manufacturing a button cell battery, in which a separate gasket is not necessitated to be interposed between an anode can and a cathode can and deformation of cans by crimping can be avoided.

Another object of the invention is to provide a method of manufacturing a button cell battery, which is applicable to a polygonal button cell battery in addition to a circular button cell battery.

A further object of the invention is to provide a method of manufacturing a zinc-air battery, which can be applied to a polygonal button cell battery while preventing deformation of a can.

A further object of the invention is to provide a cylindrical zinc-air battery and a method of manufacturing the same, in which leakage of zinc-gel is blocked.

### Technical Solution

In order to accomplish the above objects of the invention, according to one aspect of the invention, there is provided a battery comprising: an anode; a cathode; an anode can disposed to enable electrons to transfer against the anode; a cathode can disposed to enable electrons to transfer against the cathode; and a body forming a battery body, wherein one end of the body is fusion-bonded with an end portion of the anode can and the other end of the body is fusion-bonded to an end portion of the cathode can, thereby hermetically sealing the battery.

According to another aspect of the invention, there is provided a zinc-air battery comprising: a cathode membrane serving as a cathode; a zinc gel serving as an anode; a cathode can disposed to enable electrons to transfer against the cathode membrane; an anode can disposed to enable electrons to transfer against the zinc gel; and a body forming a battery body, wherein one end of the body is fusion-bonded with an end portion of the anode can and the other end of the body is fusion-bonded to an end portion of the cathode can, thereby hermetically sealing the battery.

According to a further aspect of the invention, there is provided a zinc-air battery including a zinc gel serving as an anode and a cathode membrane serving as a cathode and capturing the zinc gel, wherein both end portions of the cathode membrane face each other with a gap in-between, and the gap is filled with a resin.

According to another aspect of the invention, there is provided a zinc-air battery including a zinc gel serving as an anode and a cathode membrane serving as a cathode and capturing the zinc gel, wherein both end portions of the cathode membrane are overlapped and fusion-bonded.

According to another aspect of the invention, there is provided a cylindrical zinc-air battery comprising: a zinc gel serving as an anode; a cathode membrane serving as a cathode and capturing and hermetically sealing the zinc gel in a cylindrical form; a housing capturing the cathode membrane in a cylindrical form and having an opening formed therein for allowing air to pass through; and an insulator interposed between the cathode membrane and the housing and having an opening formed therein for allowing air to pass through.

According to another aspect of the invention, there is provided a method of manufacturing a battery, the battery including a first electrode, a second electrode, a first can disposed so as to allow electrons to transfer against the first electrode, a second can disposed so as to allow electrons to transfer against the second electrode, and a body constituting the battery body, the method comprising: a first fusion-bonding step in which an end portion of the first can is fusion-bonded with one end of the body; and a second fusion-bonding step in which an end portion of the second can is fusion-bonded with the other end of the body.

According to another aspect of the invention, there is provided a method of manufacturing a zinc-air battery, the zinc-air battery including a cathode membrane serving as a cathode, a zinc gel serving as an anode, a cathode can disposed so as to allow electrons to transfer against the cathode membrane, an anode can disposed so as to allow electrons to transfer against the zinc gel, and a body constituting the battery body, the method comprising: a first fusion-bonding step in which an end portion of the anode can is fusion-bonded with one end of the body; and a second fusion-bonding step in which an end portion of the cathode can is fusion-bonded with the other end of the body.

According to another aspect of the invention, there is provided a method of manufacturing a zinc-air battery, the zinc-air battery including a zinc gel serving as an anode and a cathode membrane serving as a cathode and capturing the zinc gel, the method comprising the steps of: disposing the cathode membrane such that both end portions thereof face each other with a gap in-between; and filling the gap with a resin and fusion-bonding the both end portions with the resin.

According to another aspect of the invention, there is provided a method of manufacturing a zinc-air battery, the zinc-air battery including a zinc gel serving as an anode, and a cathode membrane serving as a cathode and capturing the zinc gel, the method comprising the steps of: disposing the cathode membrane such that both end portions thereof are overlapped; and fusion-bonding the overlapped both end portions of the cathode membrane to each other.

According to another aspect of the invention, there is provided a method of manufacturing a cylindrical zinc-air battery, the zinc-air battery including a zinc gel serving as an anode and a cathode membrane serving as a cathode, the method comprising the steps of: hermetically sealing the cathode membrane in a cylindrical form; filling the zinc gel inside of the cathode membrane; inserting the filled cathode membrane into a cylindrical insulator; and forming a housing coating the insulator.

### Advantageous Effects

According to the invention, deformation of a can caused by can-crimping is prevented to improved reliability of contact between the can and an electrode (or MEA) and battery performance.

In addition, a cathode can and an anode can are not overlapped, thereby eliminating necessity of a separate gasket and thus simplifying the manufacturing process thereof.

Furthermore, the hermetical sealing of battery does not require can-crimping, thus enabling to fabricate various shapes of battery having a polygonal transversal cross-section, as well as a circular cross-section.

In particular, where the invention is applied to a zinc-air battery, the shape of the zinc-air battery can be diversified, departing from the conventional circular button cell type, thus broadening the application range of a zinc-air battery.

In addition, according to the invention, leakage of zinc gel can be prevented in a cylindrical zinc-air battery.

Furthermore, according to the invention, a cylindrical zinc-air battery not causing leakage of zinc gel can be fabricated, so that the zinc-air battery can be standardized to the universal AAA to A types.

### Brief Description of the Drawings

Further objects and advantages of the invention can be more fully understood from the following detailed description taken in conjunction with the accompanying drawings in which:

FIG. 1 is a sectional view of a conventional button cell battery;

FIG. 2 shows a conventional method of manufacturing a button cell battery;

FIG. 3 is a sectional view of a conventional button-type zinc-air battery;

FIG. 4 is a sectional view of a conventional button cell zinc-air battery;

FIG. 5 is a sectional view of an imaginary cylindrical zinc-air battery

FIG. 6 is a sectional view of a button-cell battery according to an embodiment of the invention;

FIG. 7 is an enlarged view of a fusion-bonded region of the can and the body in the battery of FIG. 6;

FIG. 8 is a flow chart illustrating a method of manufacturing a button cell battery according to an embodiment of the invention;

FIGS. 9 to 11 are flow charts showing a method of fusion-bonding the can and the body in FIG. 11;

FIG. 12 is a flow chart showing a method of manufacturing a button cell battery according to another embodiment of the invention;

FIG. 13 is a flow chart showing a method of manufacturing a button cell zinc-air battery according to another embodiment of the invention;

FIG. 14 is a flow chart showing a method of manufacturing a button cell zinc-air battery according to another embodiment of the invention;

FIG. 15 illustrates a transversal cross-section of a cylindrical zinc-air battery according to another embodiment of the invention;

FIGS. 16 and 17 illustrate a method of manufacturing a cylindrical zinc-air battery according to another embodiment of the invention;

FIG. 18 illustrates a transversal cross-section of a cylindrical zinc-air battery according to another embodiment of the invention; and

FIG. 19 illustrates a method of manufacturing a cylindrical zinc-air battery according to another embodiment of the invention.

### Best Mode for Carrying Out the Invention

Hereinafter, the preferred embodiments of the present invention will be described in detail with reference to the accompanying drawings.

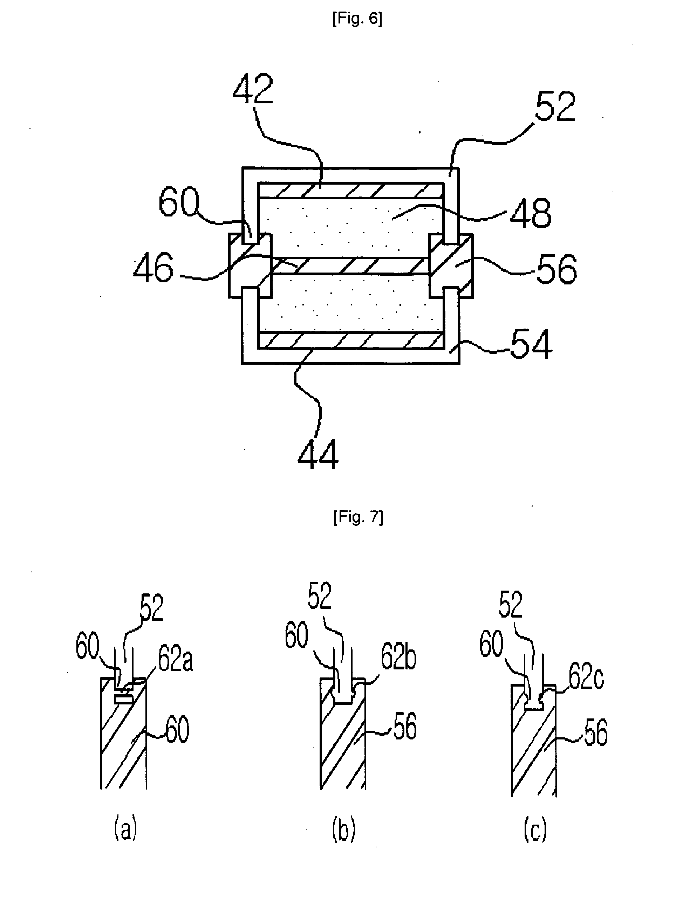

FIG. 6 is a sectional view of a button cell battery according to an embodiment of the invention.

The button cell battery of this embodiment includes a first can 52 and a second can 54 having a U-shape cross-section, and a body 56. Inserted inside of these are a first electrode 42 and a second electrode 44, a separator 46 for insulating them, and an electrolyte 48.

The first and second electrodes 42 and 44 are accommodated inside of the U-shape cans 52 and 54. The end portion 60 of the cans 52 and 54 is protruded higher than the electrodes 42 and 44. The first and second cans 52 and 54 are made of a conductive material and may be fabricated through a pressing process. The first electrode 42 is contacted with the first can 52 for electrons to be able to transfer and thus the first can 52 serves as an external terminal of the first electrode 42. Similarly, the second can 54 contacts the second electrode 44 to serve as an external terminal of the second electrode 44.

The separator 46 is made of a porous material to prevent the first and second electrodes 42 and 44 from being directly contacted with each other and at the same time allows electrons to be transferred through the electrolyte 48.

In this embodiment, hermetical sealing of the battery may be carried out by fusion-bonding of the cans 52 and 54 and the body 56. The body 56 is made of an insulation resin and insulates the first and second cans 52 and 54 from each other and also is fused at the end portion 60 of the cans 52 and 54 to seal the inside of the battery. The fusion-bonding of the body 56 and the cans 52 and 54 may be performed using ultrasonic, pressing, heating or the like, which will be hereafter described.

On the other hand, the shape of the end portion 60 of the cans 52 and 54 may be changed in order to improve reliability of the fusion-bonding.

FIG. 7 is an enlarged view of the fusion-bonded region of the first can and the body.

As illustrated in FIG. 7(a), a through-hole 62a may be formed at the end portion of the can 52, which is fusion-bonded with the body 56. In this case, the melted body 56 fills the inside of the through-hole 62a. Thus, after curing of the body 56, reliability of the bonding of the can 52 and the body 56 can be improved. In addition, as shown in FIGS. 7(b) and 7(c) respectively, a protrusion or a depression may be formed at the end portion of the can 52, thereby improving reliability for the bonding of the can 52 with the body 56.

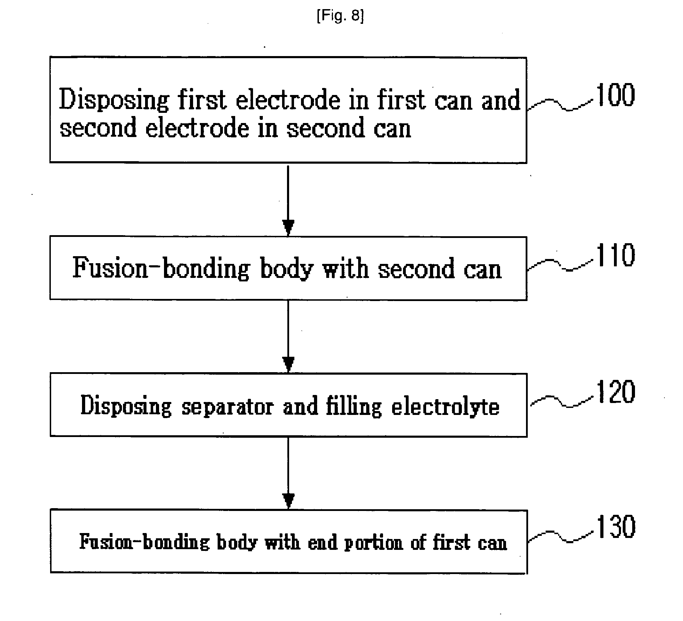

Hereafter, referring to FIGS. 6 and 8, a manufacturing method of a button cell battery according to an embodiment of the invention will be explained. The method of this embodiment starts from step 100. At the step 100, a first electrode 42 is disposed on a first can 52 and a second electrode 44 is disposed on a second can 54 to thereby form an assembly of can and electrode. The electrodes 42 and 44 are accommodated inside of the cans 52 and 54 such that the end portion 60 of the cans 52 and 54 can be protruded.

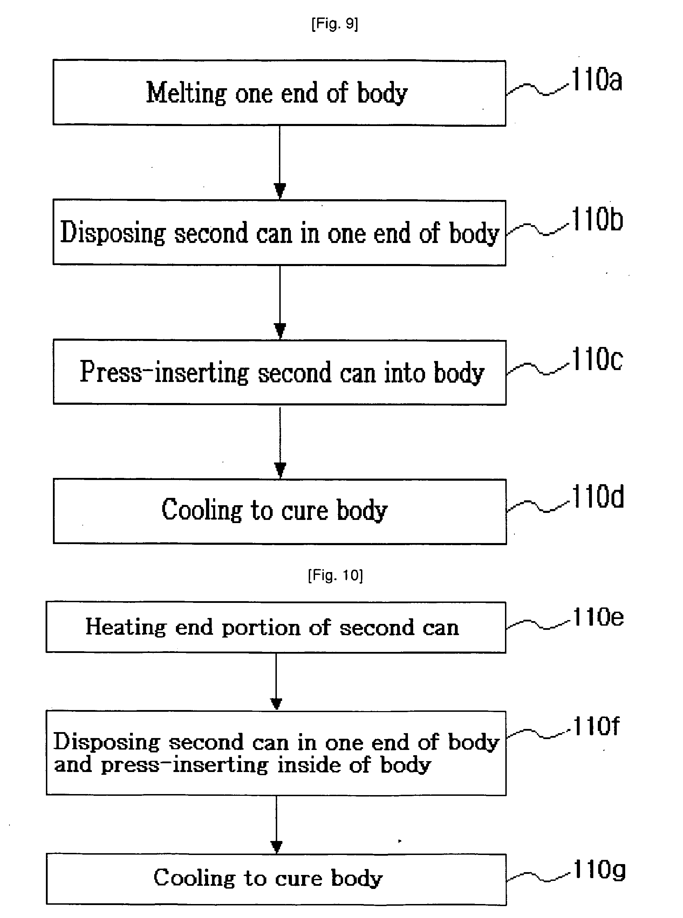

Then, at step 110, the second can 54 is fusion-bonded to one end of the body 56. Referring to FIGS. 9 to 11, a method of fusion-bonding the second can 54 with the body 56 will be explained in details.

As illustrated in FIG. 9, the fusion-bonding of the second can 54 and the body 56 may be performed after the body 56 is first melted. Specifically, first, one end of the body 56 is melted (step 110a), and then the second can 54 is disposed at one end of the body 56 (step 110b). Although the body 56 generally is melted by heating, pressurization or ultrasonic radiation can be used. The melting method may be selected depending on the body 56 material.

Thereafter, the second can 54 is pressurized and the end portion of the can is inserted into the inside of the body 56 (step 110c). The body 56 is cooled and cured to fusion-bond the second can 54 and the body 56 (step 110d).

On the other hand, first, the second can 54 may be disposed at one end of the body 56, which is then heat-melted such that the end portion of the can 54 can be inserted into the body 56 by the weight of the can 54 and fusion-bonded thereto.

Alternatively, as shown in FIG. 10, the second can 54 is heated to carry out a fusion-bonding. In this case, the second can 54 is heated to a desired temperature (step 110e). Then, the second can 54 is disposed at one end of the body 56 and the end portion of the second can 54 is pressure-inserted inside of the body 56 (step 110f). At this step, the end portion of the can 54 melts the body 56 and simultaneously is inserted into inside of the body 56. Finally, the body 56 is cooled and cured to complete the fusion-bonding (step 110g). The heating temperature of the can 54 may be determined according to the melting temperature of the body 56, the inserting pressure, or the like.

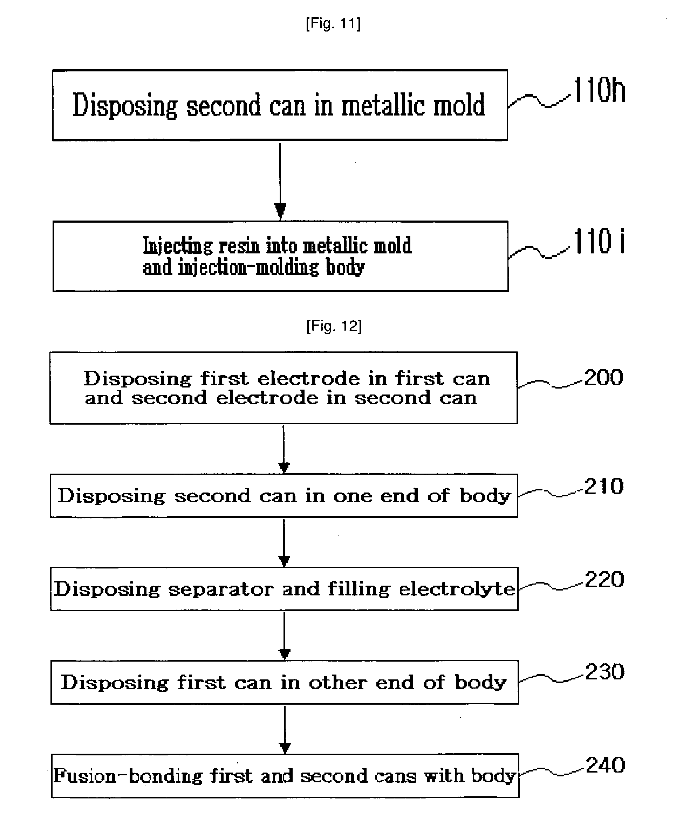

As shown in FIG. 11, the fusion-bonding of the second can 54 and the body 56 may be performed through an in-mold forming process. Specifically, the second can 54 is inserted into a metallic mold (step 110h). An injection-molding space of the body 56 shape is formed in the metallic mold. Then, at step 110i, a resin is injected and the body 56 is injection-molded, thereby forming a fusion-bonded assembly of the body 56 and the second can 54.

Referring to FIG. 8 again, at step 120, a separator 46 is disposed at a space formed by the fusion-bonding of the body 56 and the second can 54 and an electrolyte 48 is filled. Finally, the first can 52 combined with the first electrode 42 is fusion-bonded to the other end of the body 56 to complete hermetical sealing of the battery (step 130). Fusion-bonding of the first can 52 and the body 56 may be carried out in the same way as in the second can 54 and the body 56, which is described above, in conjunction with FIGS. 9 to 11.

As described above, in this embodiment, without crimping the cans 52 and 54, they are fusion-bonded with the body 56 to seal the battery, thereby enabling to prevent deformation of a can, which occurs at the central portion of the cans 52 and 54 when they are bent or crimped. Therefore, reliability of contact between the can 52, 54 and the electrode 42, 44 can be improved and the battery performance can be enhanced.

In addition, as long as the cans 52 and 54 have a U-shaped cross-section, they may be manufactured in the form of a polygon as well as a circular. Thus, the present invention can be applied to manufacturing of polygonal button cell batteries and thus applications of the battery can be extended into a variety of fields.

In the above embodiments, the second can 54 is fusion-bonded before the first can 52, but the first can 52 may be first fusion-bonded or the first and second cans 52 and 54 may be simultaneously fusion-bonded.

Referring to FIG. 12, specifically, a method of manufacturing a button cell battery according to another embodiment of the invention will be explained. In this embodiment, in the same way as in FIG. 8, it starts with formation of an assembly of a can and electrode (Step 200). Then, a second can 54 is disposed at one end of the body 56 (step 210), and a separator 46 and an electrolyte 48 are inserted inside of the space formed by the body 56 and the second can 54 (step 220). Thereafter, at step 230, a first can is disposed at the other end of the body 56.

Finally, at step 240, both ends of the body 56 are melted and, after the end portions of the cans 52 and 54 are inserted into the inside of the body 56, the body 56 is cooled and cured to fusion-bond the body 56 with the cans 52 and 54. The fusion-bonding at the step 240 may be performed in various ways, which are previously described in conjunction with FIGS. 9 to 11.

In this embodiment, two cans are fusion-bonded at the same time. Thus, the manufacturing process can be simplified to thereby improve the efficiency of battery production.

The present invention may be applied to the manufacturing of a zinc-air battery.

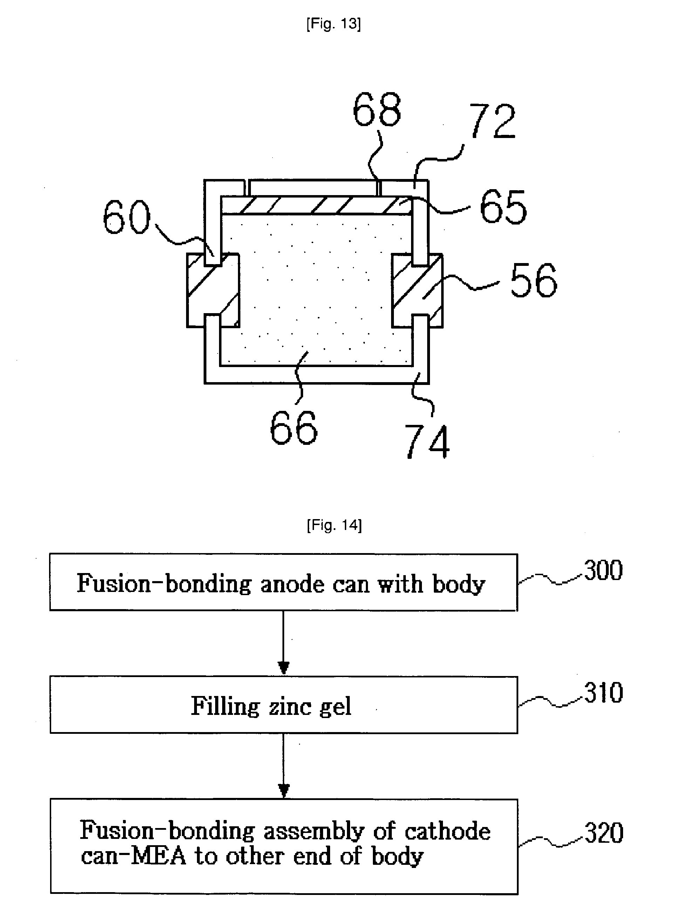

FIG. 13 is a sectional view illustrating a button cell zinc-air battery according to another embodiment of the invention.

The zinc-air batter of this embodiment includes a cathode can 72 and an anode can 74 having U-shaped cross-sections, and a body 56. The cathode can 72 accommodates a membrane electrode assembly (MEA) 65, which is contacted with the cathode can 72. In addition, the inside of the battery is filled with a zinc gel 66 serving as an anode. The cathode can 72 and the anode can 74 are formed of a conductive material and can serve as a cathodic external terminal and an anodic external terminal respectively. On the other hand, the cathode can 72 is formed with a through-hole 68 such that the MEA 65 can be contacted with air.

In the zinc-air battery of this embodiment, the cathode can 72 and the anode can 74 are fusion-bonded to the body 56 to thereby seal the battery. The fusion-bonding of the body 56 with the cathode can 72 and the anode can 74 is carried out in the same way as in the previous embodiments of FIGS. 6 and 7 and thus details thereon will not be repeated here.

Hereafter, a manufacturing method of a button cell zinc-air battery according to yet another embodiment of the invention will be explained, referring to FIGS. 13 and 14.

According to this embodiment, at step 300, an anode can 74 is fusion-bonded to one end of the body 56. The fusion-bonding of the anode can 74 and the body 56 may be carried out in various ways, which are previously explained in conjunction with FIG. 7.

Thereafter, a zinc gel 66 is filled in the internal space formed by the assembly of the anode can 74 and the body 56 (step 310). The fusion-bonding of the body 56 and the anode can 74 seals the fusion area of them, thereby preventing leakage of the zinc gel 66.

At step 320, a cathode can 72 is fusion-bonded to the other end of the body 56. The cathode can 72 is pre-assembled with an MEA 65, or an anode membrane and a separator, and the end portion 60 of the cathode can 72 is protruded higher than the MEA 65. In this step, the end portion 60 of the protruded cathode can 72 is fusion-bonded to the other end of the body 56. The fusion-bonding of the cathode can 72 and the body 56 may be performed in various ways, which are previously explained in conjunction with FIGS. 9 to 11. In this way, the fusion-bonding of the cathode can 72 and the body 56 completes hermetical sealing of the battery.

In this embodiment, the anode can 74 and the cathode can 72 are fusion-bonded with the body 56 in the described order, but the cathode can 72 may be first fusion-bonded. In addition, the anode can 74 and the cathode can 72 may be simultaneously fusion-bonded. In this case, similar to the previous embodiment described in conjunction with FIG. 12, after completion of the disposition of cans 72 and 74 and fill ing of zinc gel 66, the cans 71 and 74 and the body are fusion-bonded to seal the battery.

In this embodiment, without crimping the cans 72 and 74, they are fusion-bonded with the body 56 to seal the battery, thereby enabling to prevent deformation of a can, which occurs when they are bent or crimped. Therefore, the battery performance can be improved. In addition, a polygonal can can be used to thereby enable to manufacture a polygonal button cell battery, as well as a circular one. Thus, application range for the zinc-are battery can be extended, beyond that of the circular button cell. In particular, besides a button cell battery, in case where the present invention is extensively applied to a standard battery type such as a cylindrical shape, a square pillar shape and the like, universal application of a zinc-air battery is possible.

Hereafter, a cylindrical zinc-air battery will be explained in greater detail.

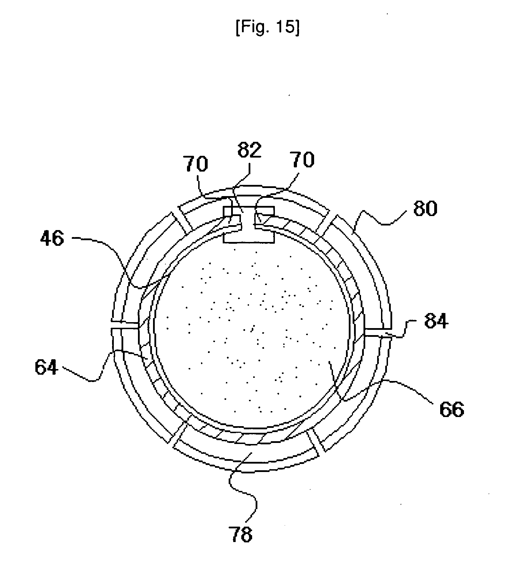

FIG. 15 is a transversal cross-section of a cylindrical zinc-air battery according to another embodiment of the invention.

The cylindrical zinc-air battery of this embodiment includes a zinc-gel 66, a separator 46 capturing the zinc gel 66, a membrane 64 serving as a cathode membrane. The membrane 64 may be enclosed with an insulator 78 and a housing 80.

The housing 80 may be a metallic plate fabricated through a press forming and protects the battery and holds the outer appearance. In addition, the housing 80 may be connected with the membrane 64 (which is a cathode) at the upper portion (not shown) of the battery and thus serve as a cathode can supplying electrons to the membrane 64. The insulator 78 is provided for insulating between the housing 80 and the membrane 64 to prevent current leakage. The insulator 78 may be fabricated by means of an injection molding process using a resin. On the other hand, an opening 84 is formed in the housing 80 and the insulator 78 for oxygen to be supplied to the membrane 64, which is a cathode.

The membrane 64 and the separator 46 may be fabricated in a plane form and then bent into a cylindrical form to enable to capture the zinc gel 66. Both end portions of the bent membrane 64 and the separator 46 face each other with a gap in-between, and are bonded with each other by means of a bonding member 82. The bonding member 82 is made of a resin and fusion-bonded to the membrane 64 and the separator 46, so that leakage of the zinc gel can be prevented at the bonding area of the both end portions. In addition, as illustrated, the bonding member 82 is formed in such a way to cover part of the membrane 64 and the separator 46, thereby further improving its sealing effect.

Hereafter, referring to FIGS. 15 to 17, a method of manufacturing a cylindrical zinc-air battery according to another embodiment of the invention will be explained.

First, a cylindrical insulator 78 is prepared. The insulator 78 may be fabricated in the form of a cylinder using an injection molding process.

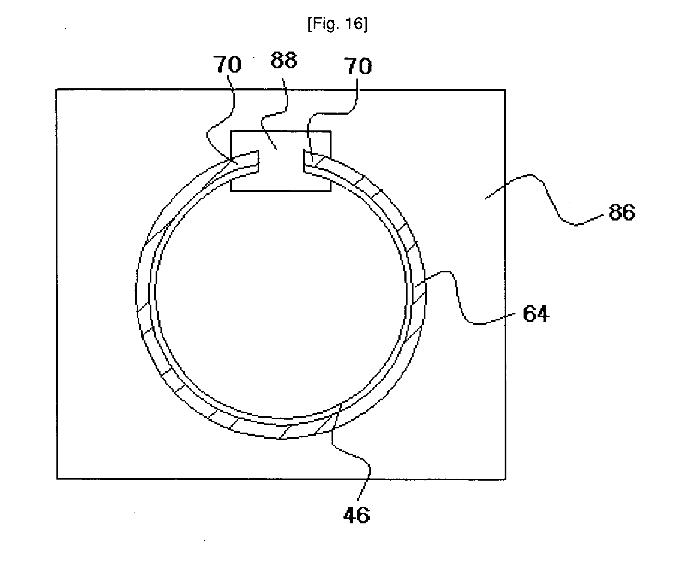

Then, a membrane 64 and a separator 46 having plane forms are prepared. As illustrated in FIG. 16, the separator 46 and the membrane 64 are disposed in a metallic mold 86 for injection molding in such a way that both end portions thereof face each other with a gap in-between. The metallic mold 86 forms a space 88 such that a resin is injected only around the gap of the membrane 64 and the separator 46. It is not necessary that the metallic mold accommodates the entirety of the membrane 64 and the separator 46. It may accommodate bonding area thereof.

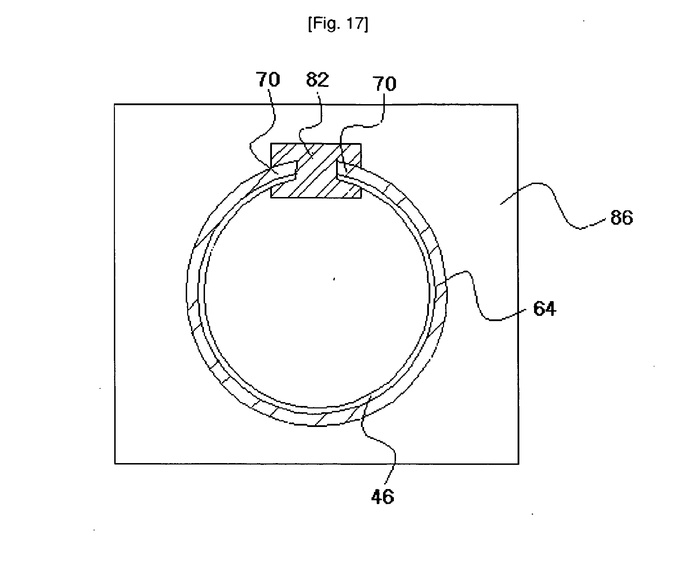

Thereafter, as illustrated in FIG. 17, a resin is injected into the space 88 and the membrane 64 and the separator 46 are fusion-bonded to form the bonding member 82. At this time, the resin may be formed in such a manner to cover part of the membrane 64 and the separator 46. In addition, a prominence-and-depression or an opening is formed in the surface of both end portions of the membrane 64 and the separator 46, which contact with the resin, thereby allowing an easy fusion-bonding of resin. The resin is fusion-bonded with the membrane 64 and the separator 46 and thus internal space can be sealed and, in case where a zinc gel 66 is filled, leakage therefor can be prevented.

A zinc gel 66 is filled inside of the above-formed cylindrical membrane 64 and the separator 46, which is then inserted inside of the insulator 78. Finally, a housing is formed so as to coat the insulator 78 to thereby complete the manufacturing of a cylindrical zinc-air batter.

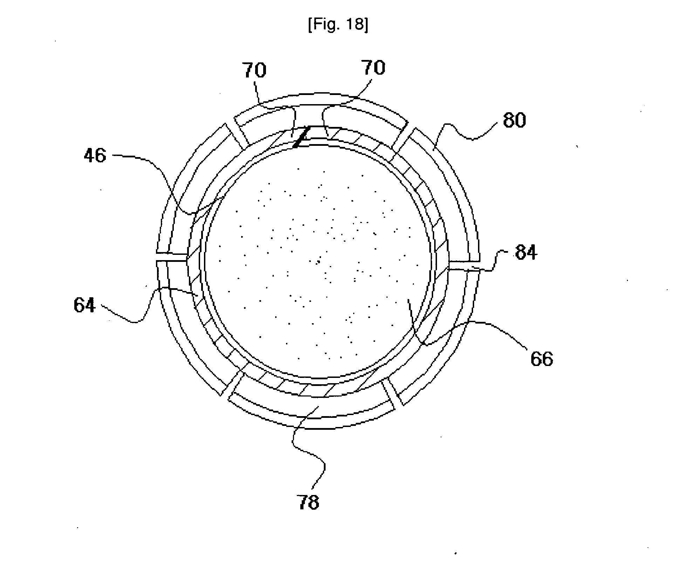

Hereafter, referring to FIG. 18, a cylindrical zinc-air battery according to another embodiment of the invention will be explained.

FIG. 18 is a transversal cross-section of a cylindrical zinc-air battery according to another embodiment of the invention.

In this embodiment, the same elements as in the previous embodiment are denoted by the same reference numerals and details thereon will not be repeated.

The cylindrical zinc-air battery of this embodiment includes a zinc gel, a separator capturing the zinc gel 66, and a membrane 64 serving as a cathode membrane. The membrane 64 may be wrapped around by an insulator 78 and a housing 80. In addition, an opening 84 may be formed in the housing 80 and the insulator 78 for air to come in and out.

The membrane 64 and the separator 46 may be formed in a plane form and then bent into the form of a cylinder so as to capture the zinc gel 66. At this time, both end portions of the bent membrane 64 and separator 46 are overlapped. In this case, as illustrated in FIG. 18, the both end portions may have slant faces inclined in opposite directions to each other to thereby so that they can be naturally overlapped and the thickness is not increased after being overlapped. The shape of the both end portion is not limited to the slant faces, but may take various other shapes as long as they have a complementary shape, for example, a protrusion in one face and a depression in the other face. The overlapped both end portions 70 may be fusion-bonded through heating, pressurizing or ultrasonic radiation. Thus, the zinc gel is prevented from being leaked through bonding area of the membrane 64 and the separator 46. On the other hand, although the membrane 64 and the separator 46 are illustrated as having a continuous slant face, they may have different shapes respectively to improve their sealing effects after bonding.

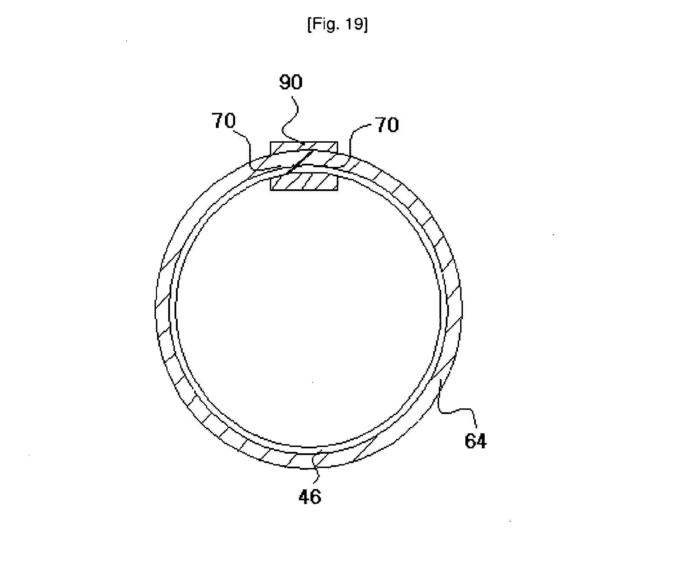

Then, referring to FIGS. 18 and 19, a method of manufacturing a cylindrical zinc-air battery according to another embodiment of the invention will be explained.

Firstly, a cylindrical insulator 78 is prepared and a membrane 64 and a separator 46 having plane shapes are prepared. Then, as illustrated in FIG. 19, the separator 46 and the membrane 64 are disposed in a jig 90 in such a way that its end portions are overlapped. The jig 90 can accommodate only the bonding area of the membrane 64 and the separator 46, not their entirety.

Thereafter, the overlapped both end portions 70 are fusion-bonded by means of heating, pressurizing or ultrasonic radiation through the jig 90. In this way, the both end portions of the membrane 64 and the separator 46 are fusion-bonded to each other to enable to seal the internal space thereof, and thus, in case where a zinc gel 66 is filled, leakage of the zinc gel 66 can be prevented.

A zinc gel 66 is filled inside of the above formed cylindrical membrane 64 and separator 46, which are then inserted into the inside of an insulator 78. Finally, a housing 80 is formed so as to coat the insulator 78 to complete manufacturing of a cylindrical zinc-air battery.

Although the present invention has been described with reference to several preferred embodiments, the description is illustrative of the invention and is not to be construed as limiting the invention. Various modifications and variations may occur to those skilled in the art, without departing from the scope of the invention as defined by the appended claims.

For example, in the batteries of the above embodiments, the separator 46 and the membrane 64 are illustrated as separate elements, but they may be embodied as a single element. In particular, according to the invention, these elements may be replaced by a membrane-electrode assembly (MEA). The MEA is a composite serving as a conventional cathode membrane and separator, which is well known in the art. Of course, instead of the MEA, a cathode membrane and a separator can be employed as separate elements, which is included in the scope of the invention as appreciated to those skilled in the art. In addition, each element of the invention may be made of one of well-known materials, from which those skilled in the art will be able to easily select the most suitable one.

In addition, in the manufacturing method of the above embodiments, individual process steps have been described in a particular order. However, it should be appreciated to those skilled in the art that these steps may be performed in a different order, without departing from the scope of the invention.

Furthermore, although in the embodiments of the invention, only essential elements related to the battery functions have been explained, in order to improve the functions of a battery, various well-known other elements may be added. For example, various functional membranes, such as a water-repellent membrane or a diffusion membrane, may be interposed between the membrane and the cathode can of a zinc-air battery.

Although the present invention has been described with reference to several preferred embodiments shown in figures, the description is just illustrative of the invention and various modifications and variations may occur to those skilled in the art.

## Claims

1. A zinc-air battery including a zinc gel serving as an anode and a cathode membrane serving as a cathode and capturing the zinc gel, wherein both end portions of the cathode membrane face each other with a gap in-between, and the gap is filled with a resin.

2. The zinc-air battery according to claim 1, wherein the cathode membrane is provided with a prominence-and-depression or an opening formed in a surface which contacts with the resin.

3. The zinc-air battery according to claim 1 or 2, wherein both end portions of the cathode membrane are overlapped and fusion-bonded.

4. The zinc-air battery according to claim 3, wherein the both end portions of the cathode membrane have a complementary shape.

5. A method of manufacturing a zinc-air battery, the zinc-air battery including a zinc gel serving as an anode and a cathode membrane serving as a cathode and capturing the zinc gel, the method comprising the steps of: disposing the cathode membrane such that both end portions thereof face each other with a gap in-between; and filling the gap with a resin and fusion-bonding the both end portions with the resin.

6. The method according to claim 5, wherein the fusion-bonding includes the step of filling the resin and fusion-bonding through an injection molding process.

7. The method according to claim 5 or 6, the method further comprising the steps of:
disposing the cathode membrane such that both end portions thereof are overlapped; and
fusion-bonding the overlapped both end portions of the cathode membrane with each other.

## Patentansprüche

1. Zink-Luft-Batterie mit einem als Anode dienenden Zinkgel und einer als Katode dienenden Katodenmembran, die das Zinkgel zurückhält, bei der beide Endabschnitte der Katodenmembran zueinander weisen und ein Spalt dazwischen gebildet ist, der mit einen Harz gefüllt ist.

2. Zink-Luft-Batterie nach Anspruch 1, bei der die Katodenmembran mit einem Vorsprung und einer Vertiefung oder mit einer Öffnung in einer Oberfläche ausgebildet ist, die mit dem Harz in Berührung ist.

3. Zink-Luft-Batterie nach Anspruch 1 oder 2, bei der beide Endabschnitte der Katodenmembran überlappt und schmelzverschweißt sind.

4. Zink-Luft-Batterie nach Anspruch 3, bei der die beiden Endabschnitte der Katodenmembran komplementäre Formen haben.

5. Verfahren zur Herstellung einer Zink-Luft-Batterie, bei der die Zink-Luft-Batterie ein als Anode dienendes Zinkgel und eine als Katode dienende Katodenmembran, die das Zinkgel zurückhält, enthält, wobei das Verfahren die Schritte aufweist:
Anordnen der Katodenmembran auf eine solche Weise, dass ihre beiden Endabschnitte zueinander weisen und ein Spalt dazwischen vorgesehen ist; und
Füllen des Spalts mit einem Harz und Schmelzverschweißen der beiden Endabschnitte mit dem Harz.

6. Verfahren nach Anspruch 5, bei dem das Schmelzschweißen den Schritt des Einfüllens des Harzes und des Schmelzschweißens durch einen Spritzgießprozess enthält.

7. Verfahren nach Anspruch 5 oder 6, bei dem das Verfahren ferner die Schritte aufweist:
Anordnen der Katodenmembran auf eine solche Weise, dass sich ihre beiden Endabschnitte überlappen; und
Schmelzverschweißen der überlappten beiden Endabschnitt der Katodenmembran miteinander.

## Revendications

1. Pile zinc-air incluant un gel à base de zinc servant d'anode et une membrane de cathode servant de cathode et capturant le gel à base de zinc, dans laquelle les deux portions terminales de la membrane de cathode se font mutuellement face avec un intervalle qui les sépare, et l'intervalle est rempli d'une résine.

2. Pile zinc-air selon la revendication 1, dans laquelle la membrane de cathode est pourvue d'un groupe formé d'une projection et d'une dépression, ou d'une ouverture formée dans une surface qui vient en contact avec la résine.

3. Pile zinc-air selon la revendication 1 ou 2, dans laquelle les deux portions terminales de la membrane de cathode sont en chevauchement et soudées par fusion.

4. Pile zinc-air selon la revendication 3, dans laquelle les deux portions terminales de la membrane de cathode ont une forme complémentaire.

5. Procédé de fabrication d'une pile zinc-air, la pile zinc-air incluant un gel à base de zinc servant d'anode et une membrane de cathode servant de cathode et capturant le gel à base de zinc, le procédé comprenant les étapes consistant à : disposer la membrane de cathode de telle façon que ses deux portions terminales se font mutuellement face avec un intervalle qui les sépare ; et à remplir l'intervalle avec une résine et à souder par fusion les deux portions terminales avec la résine.

6. Procédé selon la revendication 5, dans lequel la soudure par fusion inclut l'étape consistant à remplir la résine et effectuer le soudage-fusion via un processus de moulage par injection.

7. Procédé selon la revendication 5 ou 6, le procédé comprenant en outre les étapes consistant à :
disposer la membrane de cathode de telle façon que ses deux portions terminales sont en chevauchement ; et
souder par fusion les deux portions terminales en chevauchement de la membrane de cathode l'une avec l'autre.
